(19) **Europäisches Patentamt European Patent Office Office européen des brevets**

(11) **EP 4 385 248 B1**

(12) **EUROPEAN PATENT SPECIFICATION**

(45) Date of publication and mention
of the grant of the patent:
**28.01.2026 Bulletin 2026/05**

(21) Application number: **21953184.5**

(22) Date of filing: **13.08.2021**

(51) International Patent Classification (IPC):
*H04W 24/08* (2009.01)   *H04W 84/18* (2009.01)
*H04L 5/00* (2006.01)   *H04W 40/12* (2009.01)
*H04W 40/16* (2009.01)

(52) Cooperative Patent Classification (CPC):
**H04W 84/18; H04L 5/0057; H04W 24/08;**
H04W 40/12; H04W 40/16

(86) International application number:
**PCT/CN2021/112611**

(87) International publication number:
**WO 2023/015571 (16.02.2023 Gazette 2023/07)**

(54) **DYNAMIC COMMUNICATION CONFIGURATION FOR SUBNETWORKS**

DYNAMISCHE KOMMUNIKATIONSKONFIGURATION FÜR SUBNETZWERKE

CONFIGURATION DE COMMUNICATION DYNAMIQUE POUR SOUS-RÉSEAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.06.2024 Bulletin 2024/25**

(73) Proprietor: **Nokia Technologies Oy
02610 Espoo (FI)**

(72) Inventors:
• **FENG, Qiang
Shanghai 200082 (CN)**
• **YE, Chenhui
Shanghai 200030 (CN)**
• **TAO, Tao
Shanghai 200432 (CN)**
• **DU, Xiao
Shanghai 200061 (CN)**

(74) Representative: **Nokia EPO representatives
Nokia Technologies Oy
Karakaari 7
02610 Espoo (FI)**

(56) References cited:
**CN-A- 103 430 618      CN-A- 104 349 411
US-A1- 2017 064 591    US-A1- 2017 127 427
US-A1- 2019 132 781**

• **ADEOGUN RAMONI ET AL: "Towards 6G in-X
Subnetworks With Sub-Millisecond
Communication Cycles and Extreme Reliability",
IEEE ACCESS, IEEE, USA, vol. 8, 10 June 2020
(2020-06-10), pages 110172 - 110188,
XP011795235, DOI: 10.1109/
ACCESS.2020.3001625**

## EP 4 385 248 B1

### Description

### FIELD

Example embodiments of the present disclosure generally relate to the field of communication, and in particular, to methods, apparatuses and computer readable storage media of dynamic communication configuration for subnetworks.

### BACKGROUND

From 5th generation (5G) networks to 6th generation (6G) networks, the number of devices increases significantly. For example, there may be an increase from 100k to 10 million devices per square kilometer ($km^2$). Furthermore, in many scenarios, end devices will evolve to be a network of devices, also referred to as a subnetwork. The communication in neighboring subnetworks may utilize different frequency resources at the same time. If a distance between two subnetworks is far enough, the same frequency resources may be used in these subnetworks. However, the devices of the two subnetworks may be rapidly moving. As the devices moves closer, there will be frequency conflicts in the communication of these subnetworks. US 2017/127427 provides enhancing network topology information for a self-organizing network. US 2017/006459 provides modeling mobile network performance. Adeogun Ramoni et al. "Towards 6G in-X Subnetworks With Sub-Millisecond Communication Cycles and Exterem Reliability", IEEE Access, IEEE, USA, vol 8, 10 June 2020 (2020-06-10), pages 110172-110188, provides identifying technology components and spectrum bands for wireless isochronous real time (WIRT) subnetworks.

### SUMMARY

In general, example embodiments of the present disclosure provide methods, apparatuses and computer readable storage media for dynamic communication configuration for subnetworks.

In a first aspect, a method performed by a device external to a plurality of subnetworks is provided according to claim 1.

In a second aspect, a method performed by an agent device in a subnetwork of a plurality of subnetworks is provided according to independent claim 6.

In a third and fourth aspects, there is provided apparatuses comprising means for performing the methods according to independent claims 10 and 11.

In a fifth and sixth aspects, there is providedecomputer readable storage media comprising program instructions stored thereon according to independent claims 12 and 13.

It is to be understood that the summary section is not intended to identify key or essential features of example embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:

FIG. 1A shows a resource allocation instance of subnetworks under dynamic environment at time T according to a conventional resource allocation strategy;

FIG. 1B shows a resource allocation instance of subnetworks under dynamic environment at time T' according to a conventional resource allocation strategy;

FIG. 2 shows a simplified block diagram of an environment in which embodiments of the present disclosure may be implemented;

FIG. 3 shows a signalling flow between the device and the agent device in a subnetwork according to some example embodiments of the present disclosure;

FIG. 4A shows a communication configuration instance of subnetworks under dynamic environment at time T according to some example embodiments of the present disclosure;

FIG. 4B shows a communication configuration instance of subnetworks under dynamic environment at time T'

according to some example embodiments of the present disclosure;

FIG. 5 shows a subnetwork environment interaction diagram according to some example embodiments of the present disclosure;

FIG. 6 shows a simulation environment diagram according to some example embodiments of the present disclosure;

FIG. 7 shows a subnetwork timing diagram according to some example embodiments of the present disclosure;

FIG. 8 shows a remaining data simulation diagram according to some example embodiments of the present disclosure;

FIG. 9 shows a simulation diagram of transmission frequency configuration in one episode according to some example embodiments of the present disclosure;

FIG. 10 shows a simulation diagram of transmission power configuration in one episode according to some example embodiments of the present disclosure;

FIG. 11 shows a simulation diagram of remaining data in one time period according to some example embodiments of the present disclosure;

FIG. 12 shows a flowchart of an example method for a device according to some example embodiments of the present disclosure;

FIG. 13 shows a flowchart of an example method for a device according to some other example embodiments of the present disclosure; and

FIG. 14 shows a simplified block diagram of a device that is suitable for implementing example embodiments of the present disclosure.

Throughout the drawings, the same or similar reference numerals represent the same or similar element.

## DETAILED DESCRIPTION

Principle of the present disclosure will now be described with reference to some example embodiments. It is to be understood that these example embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

As used herein, the term "network device" refers to a device via which services may be provided to a subnetwork in a communication network. As an example, the network device may comprise a base station. The base station may comprise any suitable device via which a subnetwork may access the communication network. Examples of the base stations include a relay, an access point (AP), a transmission point (TRP), a node B (NodeB or NB), an evolved NodeB (eNodeB or eNB), a New Radio (NR) NodeB (gNB), a Remote Radio Module (RRU), a radio header (RH), a remote radio head (RRH), a low power node such as a femto, a pico, and the like. For the purpose of discussion, some example embodiments will be described with reference to base station as an example of the device.

As used herein, the term "subnetwork" refers to a network of devices composed of a plurality of devices capable of wireless communication with each other therein. The communication in the subnetwork may involve transmitting and/or receiving wireless signals using electromagnetic signals, radio waves, infrared signals, and/or other types of signals suitable for conveying information over air. In some example embodiments, the subnetwork may be configured to transmit and/or receive information without direct human interaction. For example, the subnetwork may include a robot, an autonomous vehicle, a home appliance, a wearable device or any other devices that are capable of communication. The plurality of devices in a subnetwork may be physically separated entities or may be integrated into one or more physical entities. For example, in some scenarios, a robot may serve as a subnetwork where a plurality of components of the robot as the devices of the subnetwork may communicate with each other.

As used herein, the term "circuitry" may refer to one or more or all of the following:

(a) hardware-only circuit implementations (such as implementations in only analog and/or digital circuitry) and

(b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular base station, or other computing or base station.

As used herein, the singular forms "a", "an", and "the" are intended to include the plural forms as well, unless the context clearly indicates otherwise. The term "includes" and its variants are to be read as open terms that mean "includes, but is not limited to". The term "based on" is to be read as "based at least in part on". The term "one embodiment" and "an embodiment" are to be read as "at least one embodiment". The term "another embodiment" is to be read as "at least one other embodiment". Other definitions, explicit and implicit, may be included below.

The communication in the subnetwork is very variable, which may include the communication between a static device and a rapidly moving device, the communication between rapidly moving devices and the communication between a device within the subnetwork and a device outside of the subnetwork. The devices in neighboring subnetworks may use different frequency resources at the same time, and the devices in two subnetworks with a longer distance may use the same frequency resources. However, the communication in the two subnetworks with a longer distance may suffer frequency conflicts as the devices of the subnetworks move closer to each other. Due to the high density of Internet of Things (IoT) subnetworks in the industry scenarios, the communication in such subnetworks may suffer from serious inter-subnetwork interference in frequency spectrum.

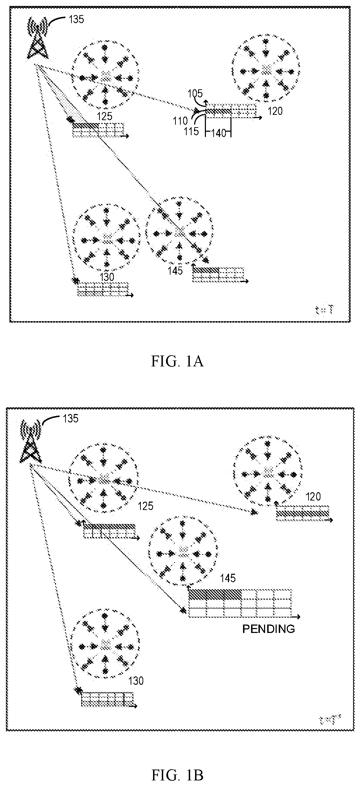

As stated above, the number of the devices in the subnetwork increase from 5G to 6G, and these devices tend to rapidly move devices with a need of communicating with each other and also communicating with a network device outside of the subnetwork. However, in some scenarios where TDM technology may be used, the devices in different subnetworks may use the same frequency resources at the same time for intra-subnetwork communication, if the instance between them is far enough. However, as these devices move closer to each other, the intra-subnetwork communication with the same frequency resources may suffer frequency conflicts, and thus the communication between these devices may suffer from serious inter-subnetwork interference in spectrum. Communication conflicts between the subnetworks will discussed below with reference to FIGS. 1A and 1B.

FIG. 1A shows example deployment of a plurality of subnetworks. As shown in FIG. 1A, different subcarrier groups 105, 110 and 115 are used in subnetworks 120, 125 and 130 for communication with a base station 135 in a time period 140, and the same subcarrier group 105 is used in different subnetworks 125 and 145.

FIG. 1B shows another example deployment of a plurality of subnetworks. As shown in FIG. 1B, the subnetwork 145 becomes closer to the subnetwork 125. Since the the same subcarrier group 105 is used in the subnetworks 125 and 145, frequency conflicts emerges between the two subnetworks 125 and 145.

Considering more challenging dynamic scenarios where devices of the subnetwork are moving and then the inter-subnetwork interference is also dynamic, there is a challenging need for real-time and adaptive resource allocation.

To address this issue, some conventional resource allocation schemes based on centralized algorithm such as the Greedy channel selection algorithm, the minimum interference plus noise ratio (SINR) guarantee algorithm, the Nearest Neighbor Conflict Avoidance (NNAC) algorithm and centralized Graph Coloring (CGC) algorithm, may be used to allocate resources for the subnetworks. However, for these conventional centralized algorithms, the required channel gain between the subnetworks may not be available. Besides, huge data exchange is inevitable which causes massive data traffic during the iterative resource allocation optimization. For example, in the conventional centralized algorithm, such as CGC, for each iteration of the model update, devices in every subnetwork should report its sensing result of the channel gain with every other subnetwork to a base station. Then, the base station allocates resources for every subnetwork and broadcasts the allocated resources to every subnetwork. Such periodic information exchange occupies a lot of resources.

Further, some other schemes based on distributed algorithms, such as multi-agent reinforcement learning (MARL) based resource allocation algorithms, are also proposed to address the massive data traffic issue. However, these distributed algorithms still cannot work with unavailable information of channel gain which is unavailable. Besides, there is no definition of the criterion on how to trigger model re-training. Furthermore, there is no specific workflow on how the multiple distributed agents coordinate with the centralized agent.

in order to enable dynamic resource allocation optimization, no matter for the conventional CGC algorithm or MARL based resource allocation algorithm, it is difficult to obtain the unavailable information (such as channel gain between any two subnetworks and source output power) in a real network environment required for these algorithms. In fact, it is impossible to obtain the channel gain between any two subnetworks in a real network environment, because there is no direct communication between any two subnetworks.

Embodiments of the present disclosure provide a dynamic communication configuration scheme for subnetworks. An agent device in a subnetwork of a plurality of subnetwork senses a received signal strength indication and sents it to a device external to the plurality of subnetworks. Thus, the external device can receive a plurality of received signal strength indications from the plurality of subnetworks, and updates a plurality of communication configuration models for the plurality of subnetworks at least in part based on the plurality of received signal strength indications. After that, the external device transmits, to the plurality of subnetworks, a plurality of sets of parameters associated with the plurality of communication configuration models to enable respective communication configurations to be determined in the plurality of subnetworks.

At a subnetwork side, an agent device of a subnetwork can receive a set of parameters associated with a communication configuration model for the subnetwork and generates the communication configuration model based on the set of parameters. Afterwards, the agent device determines a communication configuration to be used in the subnetwork using the communication configuration model.

In this proposed dynamic communication configuration scheme, the communication configuration model is updated based on received signal strength indications, without information such as source output power and the channel gain. The proposed scheme may locally achieve efficient communication configuration dynamically and in time. This scheme may avoid massive data traffic, improve transmission efficiency and enable low latency.

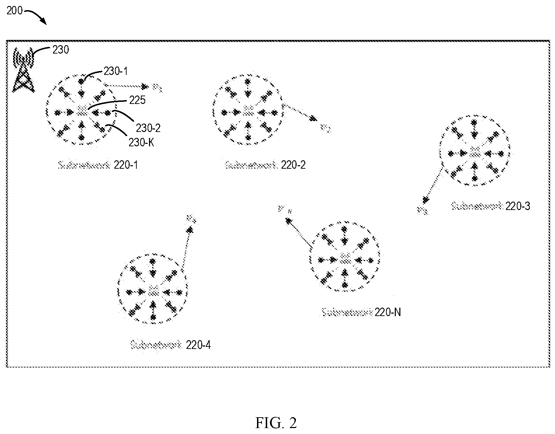

FIG. 2 shows an example environment 200 in which example embodiments of the present disclosure can be implemented. The environment 200, which may be a part of a communication network, comprises N subnetworks 220-1, 220-2, 220-3, 220-4, ... , 220-N where N represents any suitable positive integer greater than 4. For the purpose of discussion, the subnetworks 220-1, 220-2, 220-3, 220-4, ... , 220-N will be collectively or individually referred to as a subnetwork 220.

As an example, in the subnetwork 220-1, there are an agent device 225 and some other devices 230-1, 230-2, ... , 230-K where K represents any suitable positive integer greater than 2. The agent device 225 acts as an agent of the subnetwork 220-1 that may control or manage other devices 230-1, 230-2, ... , 230-M in the subnetwork 220-1. It is to be understood that any device in the subnetwork 220-1 may act as the agent device 225.

It is also to be understood that the number of subnetworks 220 and the number of devices in the subnetwork 220-1 are shown in FIG. 2 only for the purpose of illustration, without suggesting any limitation to the scope of the present disclosure. There may be any suitable number of subnetworks in the environment 200 and any suitable devices in a subnetwork.

As shown in FIG. 2, the environment 200 further comprises a device 230 external to the subnetworks 220-1, 220-2, ... , 220-N which will also be referred to as an external device. The external device 230 may be implemented by any suitable devices, such as a network device (for example, a base station) or a device in a further subnetwork (not shown). In the environment 200, there is communication between the external device 230 and the subnetworks 220-1, 220-2, ... , 220-N and between the devices within a subnetwork 220-1,.., or 220-N.

The communication in the environment 200 may follow any suitable communication standards or protocols, which are already in existence or to be developed in the future, such as Universal Mobile Telecommunication System (UMTS), long term evolution (LTE), LTE-Advanced (LTE-A), the fifth generation (5G) New Radio (NR), Wireless Fidelity (Wi-Fi) and Worldwide Interoperability for Microwave Access (WiMAX) standards, and employs any suitable communication technologies, including, for example, Multiple-Input Multiple-Output (MIMO), Orthogonal Frequency Division Multiplexing (OFDM), time division multiplexing (TDM), frequency division multiplexing (FDM), code division multiplexing (CDM), Bluetooth, ZigBee, and machine type communication (MTC), enhanced mobile broadband (eMBB), massive machine type communication (mMTC), ultra-reliable low latency communication (URLLC), Carrier Aggregation (CA), Dual Connection (DC), and NR-U technologies.

As shown in FIG. 2, according to some example embodiments of the present disclosure, a dynamic communication configuration scheme for subnetworks may be performed as follows. An agent device 225 in a subnetwork of a plurality of subnetworks 220-1, 220-2, ... , 220-N senses a received signal strength indication and sends it to a device 230 external to the plurality of subnetworks 220-1, 220-2, ... , 220-N. Thus, the external device 230 can receive a plurality of received signal strength indications from the plurality of subnetworks 220-1, 220-2, ... , 220-N, and updates a plurality of communication configuration models for the plurality of subnetworks 220-1, 220-2, ... , 220-N at least in part based on the plurality of received signal strength indications. After that, the external device 230 transmits, to the plurality of subnetworks 220-1, 220-2, ... , 220-N, a plurality of sets of parameters associated with the plurality of communication configuration models to enable respective communication configurations to be determined in the plurality of subnetworks 220-1, 220-2, ... , 220-N. At a subnetwork side, an agent device 225 of a subnetwork can receive a set of parameters associated with a communication configuration model for the subnetwork and generates the communication configuration model based on the set of parameters. Afterwards, the agent device 225 determines a communication configuration to be used in the subnetwork using the communication configuration model.

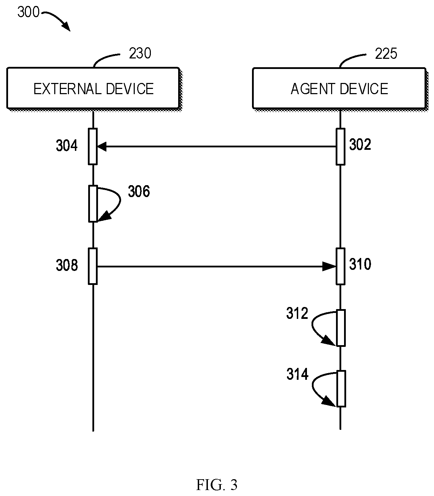

Detailed processes for the communication between the external device 230 and the agent device 225 in a subnetwork 220-1 will be discussed in the following with reference to FIGS. 3-5.

Reference is first made to FIG. 3 which shows a signalling flow 300 between the external device 230 and the agent device 225 in the subnetwork 220-1 according to some example embodiments of the present disclosure. For the purpose of discussion, the signalling flow 300 will be described with reference to FIG. 2.

As shown in FIG. 3, the agent device 225 transmits (302) a received signal strength indication to the external device 230. For example, the agent device 225 may sense or receive signals from the environment 200 and determine strength of the received signals. Then, the agent device 225 may transmit a received signal strength indication such as Received Signal Strength Indicator (RSSI) to the external device 230.

In some example embodiments, the agent device 225 may transmit the received signal strength indication to the external device 230 periodically, for example, at the beginning of every time period, where the time period may be considered as the time it takes for the communication configuration to be performed. In some other example embodiments, the agent device 225 may transmit the received signal strength indication to the external device 230 in response to receiving a request for the received signal strength indication from the external device 230. The request may be sent by the external device 230 based on the transmission failure of the subnetworks, which will be discussed in detail at the following paragraphs.

Accordingly, the external device 230 receives (304) the received signal strength indication from the agent device 225. The external device 230 further receives other received signal strength indications from other subnetworks 220-2, ... , 220-N.

Then, the external device 230 updates (306) a plurality of communication configuration models for the plurality of subnetworks 220-1, ... , 220-N at least in part based on the plurality of received signal strength indications received from the plurality of subnetworks 220-1, ... , 220-N. The communication configuration models then are used to enable respective communication configurations to be determined in the plurality of subnetworks 220-1, ... , 220-N. For example, the communication configuration may comprise at least one of a transmission frequency and a transmission power to be used in a subnetwork 220. For the reason that the communication configuration models may be updated considering features of all the plurality of subnetworks 220-1, ... , 220-N, the communication configuration models may learn relationships between the communication configurations and overall performance of the plurality of subnetworks 220-1, ... , 220-N, and then, on this basis, the communication configuration models may make appropriate decisions on the communication configurations for the plurality of subnetworks 220-1, ... , 220-N, leading the inter-subnetwork interference to be minimized.

In some example embodiments, the communication configuration model may be implemented by a neural network model, for example, based on the MARL algorithm, such as MAAC, critic-actor and DQN algorithm. Other implementations of the communication configuration model are also possible.

In some example embodiments, the agent device 225 may further transmit amount of remaining data to be transmitted in the subnetwork 220-1 within a time period and remaining time available for transmission of the remaining data within the time period. Accordingly, the external device 230 may update the communication configuration model for the subnetwork 220-1 based on the amount of remaining data, the remaining time and the received signal strength indication from the subnetwork 220-1.

The updating of the communication configuration models may be implemented using any suitable updating or training algorithm. For example, the external device 230 may use the MARL algorithm and calculate the signal to interference plus noise ratios (SINRs) based on the received signal strength indications. The SINRs may be used as the inputs of the communication configuration models based on the MARL algorithm to update the communication configuration models. After a certain number of episodes, the updating process may finish.

In some example embodiments, the external device 230 may verify the performance of the updated communication configuration models. For example, the external device 230 may use most (for example, 80%) of the samples of the received signal strength indications for the updating and use the left part (for example, 20%) of the samples of the received signal strength indications for the verification. If it is determined upon the verification that the performance of the newly updated communication configuration models are better than the old communication configuration models, the external device 230 may replace the old communication configuration models with the newly updated communication configuration models. Otherwise, the external device 230 will continuously update the communication configuration models and verify the performance of the communication configuration models.

In some example embodiments, in updating (306) the plurality of communication configuration models for the plurality of subnetworks 220-1, 220-2, ... , 220-N, the external device 230 may use a constraint model to evaluate performance of the plurality of communication configuration models to facilitate the updating. For example, the constraint model may be updated based on data (such as the amount of remaining data, the remaining time and the received signal strength indication) from the plurality of subnetworks 220-1, 220-2, ... , 220-N, and then the constraint model may have learned the communication characteristics of all the plurality of subnetworks 220-1, 220-2, ... , 220-N. The constraint model may evaluate transmission performance (such as throughput and latency) of the plurality of subnetworks 220-1, 220-2, ... , 220-N, and adjust the communication configuration models with a goal of optimizing the overall performance of the plurality of subnetworks 220-1, 220-2, ... , 220-N.。

In some example embodiments, the external device 230 may initialize the plurality of communication configuration models based on environment data of the plurality of subnetworks 220-1, 220-2, ... , 220-N from the environment 200 which may include the number of the plurality of subnetworks, working area size, working area location and output power. For example, the external device 230 may initialize the plurality of communication configuration models before bootup processes of one or more of the plurality of subnetworks 220-1, 220-2, ... , 220-N. In some example embodiments, according to the environment data of the plurality of subnetworks 220-1, 220-2, ... , 220-N the external device 230 may calculate the theoretical path losses and then calculate the received signal strength indications for the individual subnetworks , and then, on this basis, the external device 230 may initialize the plurality of communication configuration models for the plurality of subnetworks 220-1, 220-2, ... , 220-N.

In the example embodiments where the constraint model may be used to facilitate the updating of the communication models for the plurality of subnetworks, the external device 230 may initialize the constraint model and the plurality of communication configuration models based on the environment data of the plurality of subnetworks 220-1, 220-2, ... , 220-N. For example, the external device 230 may calculate the theoretical path losses and calculate the received signal strength indications for the subnetworks 220-1, 220-2, ... , 220-N, and then, on this basis, to initialize the constraint model and the plurality of communication configuration models jointly.

As shown in FIG. 3, after updating (306) the communication configuration models, the external device 230 transmits (308) a set of parameters associated with the communication configuration model for the subnetwork 220-1 to the agent device 225 to enable communication configurations to be determined in the subnetwork 220-1. The external device 230 further transmits other sets of parameters associated with other communication configuration models to agent devices of other subnetworks to enable the respective communication configurations to be determined in other subnetworks.

Accordingly, the agent device 225 receives (310) the set of parameters associated with the communication configuration model for the subnetwork 220-1 from the external device 230. Then, the agent device 225 generates (312) a communication configuration model based on the set of parameters. In some example embodiments, an initial communication configuration model may be pre-installed in the subnetwork 220-1 before bootup process. In some other embodiments, the initial communication configuration model may be built up based on an initial set of parameters broadcast by the external device 230 when the subnetwork bootup process starts.

The agent device 225 determines (314) the communication configuration to be used in the subnetwork 220-1 using the communication configuration model. For example, the agent device 225 may determine at least one of a transmission frequency and a transmission power to be used in the subnetwork 220-1 using the communication configuration model.

In some example embodiments, the agent device 225 may determine the communication configuration at least in part based on the received signal strength indication using the communication configuration model. In some example embodiments, in addition to the received signal strength indication, the agent device 225 may further use the amount of remaining data to be transmitted within a time period in the subnetwork 220-1 and the remaining time available for transmission of the remaining data within the time period to determine the communication configuration. With the determined communication configuration, data transmission may then be started in the subnetwork 220-1.

For the reason that the communication configuration model for the subnetwork 220-1 has been be updated taking communication behavior characteristics of the plurality of subnetworks 220-1, 220-2, ... , 220-N into account, the communication configuration obtained from the communication configuration model for the subnetwork 220-1 may facilitate the overall performance of the plurality of subnetworks 220-1, 220-2, ... , 220-N with well management of the spectrum conflict.

In some example embodiments, the agent device 225 may transmit a transmission failure report to the external device 230 if the remaining data to be transmitted within the time period in the subnetwork 220-1 is not zero at the end of the time period. In some other example embodiments, a transmission failure report may be transmitted by the agent device 225 to the external device 230 if the predefined requirement such as throughput or a successful access/transmission rate is not met in the subnetwork 220-1.

Accordingly, the external device 230 may receive at least one transmission failure report from at least one of the plurality of subnetworks. After the evaluation of the at least one transmission failure report, the external device 230 may transmit requests for the plurality of received signal strength indications to the agent devices of the subnetworks. For example, once the system reliability requirement, such as access/transmission failure rate, is not be met, the external device 230 may transmit requests for the plurality of received signal strength indications to the plurality of agent devices and start the model update process. Such an on-demand communication configuration model update scheme may greatly reduce the data exchange traffic in the network comparing to conventional schemes.

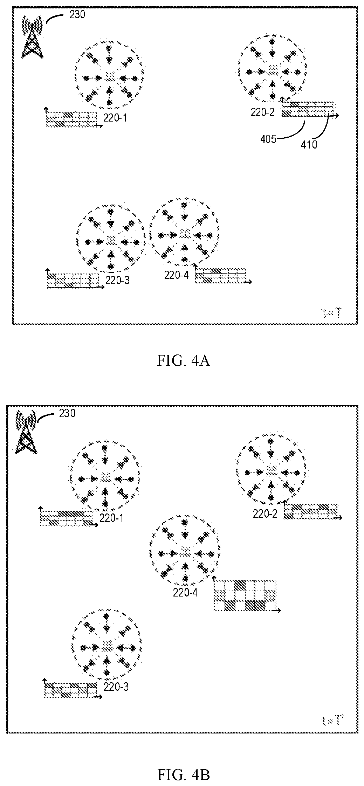

Fine-grained communication configuration in frequency and temporal domain may be observed with the use of the dynamic communication configuration scheme proposed herein, as shown in FIGS. 4A-4B where

FIG. 4A shows a communication configuration instance of the subnetworks 220 under dynamic environment at time T according to some example embodiments of the present disclosure and FIG. 4B shows a communication configuration instance of the subnetworks 220 under dynamic environment at time T' according to some example embodiments of the present disclosure. For the purpose of discussion, these communication configuration instances and will be described with reference to FIG. 2.

As shown in FIGS. 4A-4B, there are 4 subnetworks 220-1 to 220-4 in the dynamic environment where only the devices in the subnetwork 220-4 moves while the devices in the other three subnetworks 220-1 to 220-3 remain still. The communication configuration is indicated by a time and frequency resource grid 405. As described above, the resource grid corresponds horizontally to a time domain and vertically to a frequency domain. Each resource grid 405 contains several resource units 410, where each resource unit indicates horizontally a time unit and vertically a frequency unit. The time unit may be set to any length of time. The frequency unit comprises a group of subcarriers where the number of the subcarrier in a group may be set as needed.

As shown in FIG.4A, the subnetwork 220-4 is close to the subnetwork 220-3. With the dynamic communication configuration proposed herein, these subnetworks 220-1 to 220-4 are allocated with appropriate communication configurations with less spectrum conflicts between the subnetwork 220-3 and subnetwork 220-4. Then, as the devices in the subnetwork 220-4 moves, the subnetwork 220-4 is approaching the subnetwork 220-1 and subnetwork 220-2. As shown in FIG.B, these subnetworks 120-1 to 120-4 are allocated with further appropriate communication configurations with less spectrum conflicts.

The communication configurations for the subnetwork 220-1 to 220-4 may be adjusted per time unit and/or frequency unit, and thus the communication configuration scheme is more flexible. According to the dynamic communication configuration scheme proposed herein, the conflict the spectrum conflict problem for the subnetworks 220-1 to 220-4 is addressed efficiently.

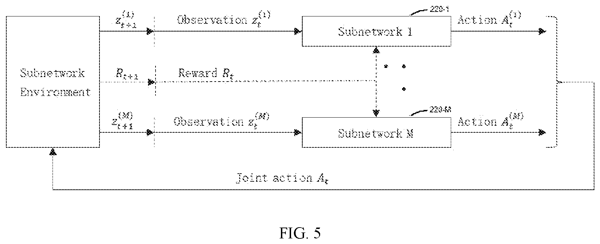

As discussed above, the communication configuration model for the subnetwork 220-1 may be updated based on the MARL algorithm, such as MAAC, critic-actor and DQN algorithm. The MARL algorithm will be discussed below with reference to FIG. 5 which shows an interaction process between the subnetworks 220 in the environment 200 according to some example embodiments of the present disclosure. For the purpose of discussion, the interaction process will be described with reference to FIG. 2.

As shown in FIG. 5, an agent device in each subnetwork interacts with the unknown communication environment to gain experience. A plurality of agent devices explore the communication environment and refine communication configuration strategies based on their own observations and the environment state. There are $M$ ($M \le N$) subnetworks in the communication environment, represented as subnetwork 220-1, 220-2, ..., 220-M respectively, noted as 1,2, ..., $m$ for the sake of simplicity. Each subnetwork has $N$ subcarrier groups.

In some example embodiments, at each time t, given the current environment state of the subnetwork $m$, $S_t^{(m)}$, the observation $Z_t^{(m)}$ of the environment may be received by the subnetwork $m$. The observation $Z_t^{(m)}$ may be determined by the observation function $O$ as $Z_t^{(m)} = O(S_t^{(m)}, m)$. Then, the subnetwork $m$ takes an action $A_t^{(m)}$. As such, a joint action $A_t$ may be formed. Thereafter, the subnetwork $m$ receives a reward $R_{t+1}^{(m)}$, and the environment evolves to the next state $S_{t+1}$ with probability $p\left(S_{t+1}^{(m)}, R_{t+1}^{(m)} \middle| S_t^{(m)}, A_t^{(m)}\right)$. Then, the new observation $Z_{t+1}^{(m)}$ may be received by each subnetwork. All subnetworks share the same reward in the system such that cooperative behavior among them is encouraged.

For the subnetwork $m$, the true environment state $S_t^{(m)}$, which could include global channel conditions and behaviors of all subnetworks, is unknown. The subnetwork $m$ may only acquire knowledge of the underlying environment through the lens of an observation function. In some example embodiments, the observation space of the subnetwork $m$ may contain the received signal strength indication at subcarrier group $n$, $RSSI_m(n)$, the remaining data $D_m$, and the remaining time $T_m$.

Then, the observation function for the subnetwork $m$ may be represented as:

$$O(s_t, m) = \{D_m, T_m, \{RSSI_m(n)\}_{n \in \{1,2,\ldots,N\}}\} \qquad (1)$$

In some example embodiments, the action space is composed of particular communication configurations, such as a transmission frequency and a transmission power. In some example embodiments, the transmission frequency may be selected from several subcarrier groups, and the transmission power may be selected from several certain options, such as 0 dBm,-10 dBm and -114 dBm, where 0 dBm represents the maximal total transmission power and -114 dBm represents zero transmission power.

In communication configuration problems, the objective is increasing the success probability of the subnetwork payload delivery within a certain time constraint.

In some example embodiments, the payload related reward at time t may be set as:

$$R_t^{(m)} = \begin{cases} \sum_{n=1}^{N} \theta_m[n] C_m[n, t], & if\ D_m \geq 0 \\ \beta, & otherwise \end{cases} \qquad (2)$$

where $R_m(t)$ represents the reward of subnetwork $m$ at time $t$, $D_m$ represents the remaining data, $\theta_m[n]$ represents whether the action of subnetwork $m$ at time t is subcarrier group $n$. If the subcarrier group $n$ is chosen, then $\theta_m[n] = 1$, otherwise, $\theta_m[n] = 0$. $C_m[n, t]$ represents the transmitted payload of subnetwork $m$ at channel $n$ and at time $t$.

Then, the total reward may be represented as :

$$R_{t+1} = \lambda_1 e^{-m} + \lambda_2 \Sigma_m R_t^{(m)} \qquad (3)$$

where $\lambda_1$ and $\lambda_2$ represent factors.

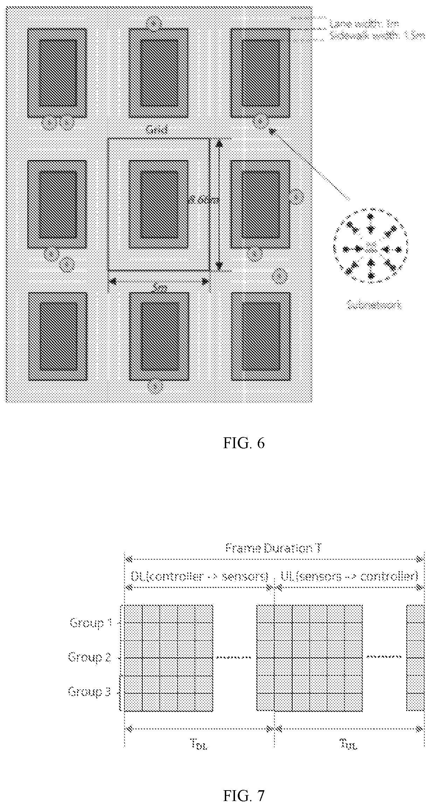

FIG. 6 shows a simulation environment diagram according to some example embodiments of the present disclosure. In FIG. 6, the subnetworks move along roads. For example, a robot may serve as a subnetwork where a plurality of components (such as a controller, a plurality of sensors and a plurality of actuators) of the robot as the devices of the subnetwork may communicate with each other. The sensors of the subnetworks are used to report the status (such as received signal strength indication) and the actuators of the subnetworks are used to operate the subnetwork. In this simulation, every subnetwork uses a subcarrier group for internal communication. Frequency conflicts may emerge between the subnetworks which use the same subcarrier group.

The deployment and system parameters are listed in Table 1. In this simulation, for example, there are 4 subnetworks (represented as subnetwork 1 (S-N 1), subnetwork 2 (S-N 2), subnetwork 3 (S-N 3) and subnetwork 4 (S-N 4) respectively) in the environment, where only 3 carrier groups are available. The minimal TTI is 1ms. The path loss is considered to change per snapshot duration, for example, per 100ms. The subnetworks move along the roads randomly with the velocity 2m/s (7.2Km/s).

Table 1 simulation environment parameters

| Parameter | Value |
|---|---|
| Deployment area [$m^2$] | 24.98×15 |
| Number of devices per subnetwork, S | 18 |
| Minimum inter-subnetwork distance [m] | 1.5 |
| Velocity, v[m/s] | 2.0 |
| Go straight with probability | 50% |
| Turn left with probability | 25% |
| Turn right with probability | 25% |
| Transmission Time Interval [ms] | 1.0 |
| Snapshot duration [ms] | 100 |
| Required payload in one duration [Byte] | 50K |
| Center frequency | 6 GHz |
| Bandwidth of each group [Hz] | 1M |
| Noise power $\sigma^2$ [dBm] | -114 |

(continued)

| Parameter | Value |
|---|---|
| Subnetwork transmission power [dBm] | 10 |
| Subnetwork Number, M | 4 |
| Carrier group number, N | 3 |

FIG. 7 shows a subnetwork timing diagram according to some example embodiments of the present disclosure. As shown in FIG. 7, three subcarrier groups can be used. In a frame duration T, uplink transmissions follows downlink transmissions. For example, the direction of the downlink transmissions is from the controller to the sensors, while the direction of the uplink transmissions is from the sensors to the controller.

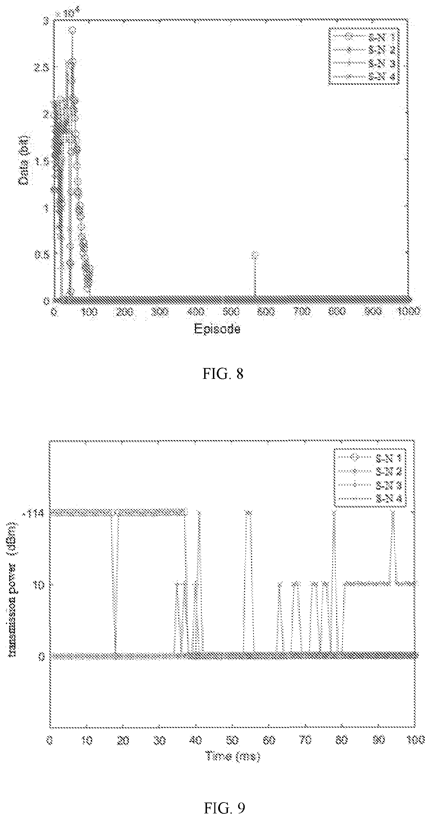

FIG. 8 shows a remaining data simulation diagram according to some example embodiments of the present disclosure. FIG. 8 shows the remaining data after each episode. As shown in FIG. 8, after about 100 episodes, the communication configuration models for most of the networks converge to their stable statuses. In the next 900 episodes, only one subnetwork can't achieve the required throughput once.

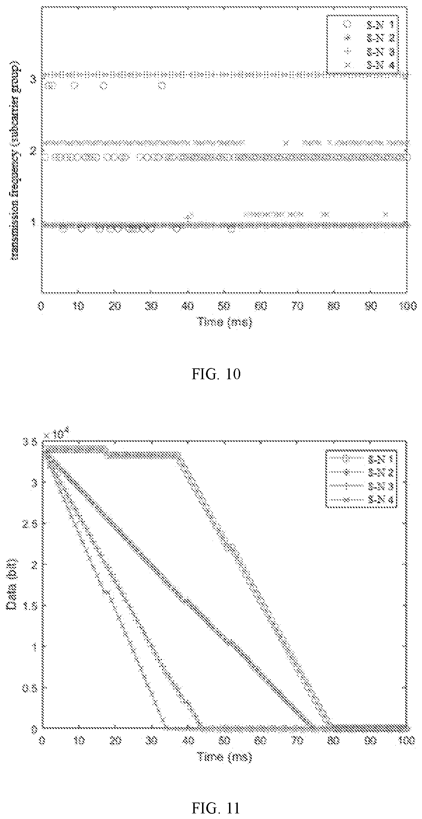

FIG. 9 shows a simulation diagram of transmission frequency configuration in one episode according to some example embodiments of the present disclosure. FIG. 10 shows a simulation diagram of transmission power configuration in one episode according to some example embodiments of the present disclosure. As shown in FIGS. 9-10, during 0~40ms, the subnetwork 1 chooses -114dBm, so the subnetwork 2, the subnetwork 3 and the subnetwork 4 can achieve their maximal speed. Since 40ms, the subnetwork 4 reduces its transmission power to enable the transmission of the subnetwork 1 to be faster.

FIG. 11 shows a simulation diagram of remaining data in one episode according to some example embodiments of the present disclosure. As shown in FIG. 11, at the beginning, the subnetwork 1, the subnetwork 2 and the subnetwork 3 have the maximal speed and the subnetwork 4 have the lowest transmission power, so the subnetwork 1, the subnetwork 2 and the subnetwork 3 can finish the transmission and at the same time and the subnetwork 4 have nearly no data transmitted. Since 60 ms, the subnetwork 4 reduces its transmission power, so the subnetwork 1 can get fast speed and finish its data transmission in one episode. Simulation result shows that the subnetworks can determine their communication configurations based on the proposed communication configuration model correctly.

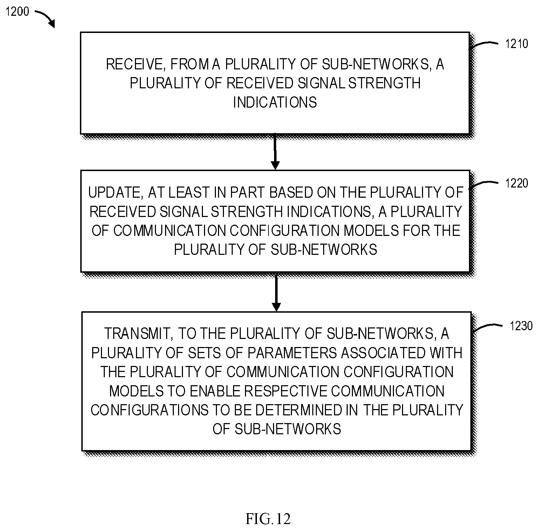

FIG. 12 shows a flowchart of an example method 1200 according to some example embodiments of the present disclosure. The method 1200 can be implemented at the external device 230 as shown in FIG. 2. For the purpose of discussion, the method 400 will be described with reference to FIG. 2.

At block 1210, the external device 230 receives, from a plurality of subnetworks 220-1, ... , 220-N, a plurality of received signal strength indications. At block 1220, the external device 230 updates, at least in part based on the plurality of received signal strength indications, a plurality of communication configuration models for the plurality of subnetworks 220-1, ... , 220-N. At block 1230, the external device 230 transmits, to the plurality of subnetworks 220-1, ... , 220-N, a plurality of sets of parameters associated with the plurality of communication configuration models to enable respective communication configurations to be determined in the plurality of subnetworks 220-1, ... , 220-N.

In some example embodiments, the external device 230 may update a communication configuration model of the plurality of communication configuration models for a subnetwork of the plurality of subnetworks 220-1, ... , 220-N, at least in part based on a received signal strength indication of the plurality of received signal strength indications from the subnetwork of the plurality of subnetworks 220-1, ... , 220-N.

According to the invention, the external device 230 receives, from the plurality of subnetworks 220-1, ... , 220-N, amount of remaining data to be transmitted within a time period in the respective subnetworks and remaining time available for transmission of the remaining data within the time period. Further, the external device 230 updates the plurality of communication configuration models, based on the amount of the remaining date, the remaining time and the plurality of received signal strength indications from the plurality of subnetworks 220-1, ... , 220-N.

In some example embodiments, the external device 230 may update, at least in part based on the plurality of received signal strength indications, a constraint model for the plurality of subnetworks 220-1, ... , 220-N. Then, the external device 230 may use the constraint model to evaluate performance of the plurality of communication configuration models. Further, the external device 230 may update the plurality of communication configuration models based on the evaluated performance of the plurality of communication configuration models.

In some example embodiments, the external device 230 may initialize, based on environment data of the plurality of the subnetworks, the constraint model and the plurality of communication configuration models.

In some example embodiments, the external device 230 may receive, from at least one of the plurality of subnetworks 220-1, ... , 220-N, at least one transmission failure report. Further, the external device 230 may transmit, to the plurality of devices, requests for the plurality of received signal strength indications.

In some example embodiments, a communication configuration of the communication configurations comprises at least one of a transmission frequency and a transmission power to be used in a subnetwork of the plurality of subnetworks 220-1, ... , 220-N.

Those skilled in the art can understand that all operations and features as described above with reference to FIGS. 2-4 are likewise applicable to the method 1200 and have similar effects.

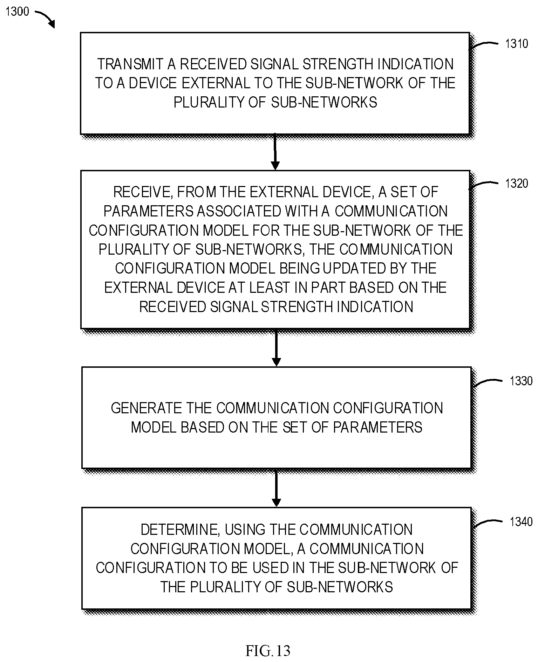

FIG. 13 shows a flowchart of an example method 1300 according to some other example embodiments of the present disclosure. The method 1300 can be implemented at the agent device 225 in the subnetwork 220-1 as shown in FIG. 2. For the purpose of discussion, the method 400 will be described with reference to FIG. 2.

At block 1310, the agent device 225 transmits a received signal strength indication to a device external to the subnetwork 220-1 of the plurality of subnetworks 220-1, ... , 220-N. At block 1320, the agent device 225 receives, from the external device, a set of parameters associated with a communication configuration model for the subnetwork 220-1 of the plurality of subnetworks 220-1, ... , 220-N, the communication configuration model being updated by the external device at least in part based on the received signal strength indication. At block 1330, the agent device 225 generates the communication configuration model based on the set of parameters. At block 1340, the agent device 225 determines, using the communication configuration model, a communication configuration to be used in the subnetwork 220-1 of the plurality of subnetworks 220-1, ... , 220-N.

In some example embodiments, the agent device 225 may in response to receiving, from the external device, a request for the received signal strength indication, transmits the received signal strength indication to the external device.

According to the invention, the agent device 225 transmits, to the external device, amount of remaining data to be transmitted within a time period in the subnetwork 220-1 of the plurality of subnetworks 220-1, ... , 220-N and remaining time available for transmission of the remaining data within the time period, to enable the external device to update the communication configuration model based on the amount of remaining data, the remaining time and the received signal strength indication.

In some example embodiments, the agent device 225 may in response to incompletion of data transmission within a time period in the subnetwork 220-1 of the plurality of subnetworks 220-1, ... , 220-N, transmit a transmission failure report to the external device.

In some example embodiments, the communication configuration comprises at least one of a transmission frequency and a transmission power to be used in the subnetwork 220-1 of the plurality of subnetworks 220-1, ... , 220-N.

Those skilled in the art can understand that all operations and features as described above with reference to FIGS. 2-4 are likewise applicable to the method 1300 and have similar effects.

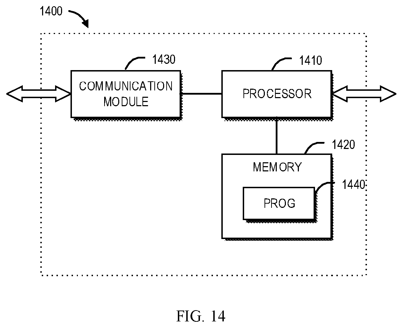

FIG. 14 is a simplified block diagram of a device 1400 that is suitable for implementing example embodiments of the present disclosure. The device 1400 can be implemented at or as a part of the external device 230 or the agent device 225 as shown in FIG. 1.

As shown, the device 1400 includes a processor 1410, a memory 1420 coupled to the processor 1410, a communication module 1430 coupled to the processor 1410, and a communication interface (not shown) coupled to the communication module 1430. The memory 1420 stores at least a program 1440. The communication module 1430 is for bidirectional communication, for example, via multiple antennas. The communication interface may represent any interface that is necessary for communication.

The program 1440 is assumed to include program instructions that, when executed by the associated processor 1410, enable the device 1400 to operate in accordance with the example embodiments of the present disclosure, as discussed herein with reference to FIGS. 2-4. The example embodiments herein may be implemented by computer software executable by the processor 1410 of the device 1400, or by hardware, or by a combination of software and hardware. The processor 1410 may be configured to implement various example embodiments of the present disclosure.

The memory 1420 may be of any type suitable to the local technical network and may be implemented using any suitable data storage technology, such as a non-transitory computer readable storage medium, semiconductor based memory devices, magnetic memory devices and systems, optical memory devices and systems, fixed memory and removable memory, as non-limiting examples. While only one memory 1420 is shown in the device 1400, there may be several physically distinct memory modules in the device 1400. The processor 1410 may be of any type suitable to the local technical network, and may include one or more of general purpose computers, special purpose computers, microprocessors, digital signal processors (DSPs) and processors based on multicore processor architecture, as non-limiting examples. The device 1400 may have multiple processors, such as an application specific integrated circuit chip that is slaved in time to a clock which synchronizes the main processor.

When the device 1400 acts as the external device 230 or a part of the external device 230, the processor 1410 and the communication module 1430 may cooperate to implement the method 1200 as described above with reference to FIGS. 2-4. When the device 1400 acts as the agent device 225 in the subnetwork 220-1 or a part of the agent device 225, the processor 1410 and the communication module 1430 may cooperate to implement the method 1300 as described above with reference to FIGS. 2-4. All operations and features as described above with reference to FIGS. 2-4 and 12-13 are likewise applicable to the device 1400 and have similar effects. For the purpose of simplification, the details will be omitted.

Generally, various example embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of example embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method 1200 or 1300 as described above with reference to FIGS. 2-4. Generally, program modules include routines, programs, libraries, objects, classes, components, data structures, or the like that perform particular tasks or implement particular abstract data types. The functionality of the program modules may be combined or split between program modules as desired in various example embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a standalone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable media.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), Digital Versatile Disc (DVD), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular example embodiments. Certain features that are described in the context of separate example embodiments may also be implemented in combination in a single embodiment. Conversely, various features that are described in the context of a single embodiment may also be implemented in multiple example embodiments separately or in any suitable subcombination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1.  A method (1200) performed by a device (230) external to a plurality of subnetworks, comprising:

    receiving (1210), from agent devices (225) of the plurality of subnetworks, a plurality of received signal strength indications, amount of remaining data to be transmitted within a time period in the respective subnetworks and remaining time available for transmission of the remaining data within the time period;
    updating (1220), at least in part based on the plurality of received signal strength indications, the amount of remaining data to be transmitted within the time period and the remaining time available for transmission of the remaining data within the time period, a plurality of communication configuration models for the plurality of subnetworks; and

transmitting (1230), to the agent devices of the plurality of subnetworks, a plurality of sets of parameters associated with the plurality of communication configuration models to enable respective communication configurations to be determined in the plurality of subnetworks.

2. The method of claim 1, wherein updating the plurality of communication configuration models comprises:
updating a communication configuration model of the plurality of communication configuration models for a subnetwork of the plurality of subnetworks, at least in part based on a received signal strength indication of the plurality of received signal strength indications from the subnetwork of the plurality of subnetworks.

3. The method of any of claims 1-2, wherein updating the plurality of communication configuration models comprises:

updating, at least in part based on the plurality of received signal strength indications, a constraint model for the plurality of subnetworks;
using the constraint model to evaluate performance of the plurality of communication configuration models; and
updating the plurality of communication configuration models based on the evaluated performance of the plurality of communication configuration models.

4. The method of claim 3, further comprising:

initializing, based on environment data of the plurality of the subnetworks, the constraint model and the plurality of communication configuration models;
receiving, from at least one of the plurality of subnetworks, at least one transmission failure report; and
transmitting, to the plurality of devices, requests for the plurality of received signal strength indications.

5. The method of any of claims 1-4, wherein a communication configuration of the communication configurations comprises at least one of a transmission frequency and a transmission power to be used in a subnetwork of the plurality of subnetworks.

6. A method (1300) performed by an agent device (225) in a subnetwork of a plurality of subnetworks, comprising:

transmitting (1310) a received signal strength indication, amount of remaining data to be transmitted within a time period in the respective subnetworks and remaining time available for transmission of the remaining data within the time period to a device (230) external to the subnetwork of the plurality of subnetworks;
receiving (1320), from the external device, a set of parameters associated with a communication configuration model for the subnetwork of the plurality of subnetworks, the communication configuration model being updated by the external device at least in part based on the received signal strength indication, the amount of remaining data to be transmitted within the time period and the remaining time available for transmission of the remaining data within the time period;
generating (1330) the communication configuration model based on the set of parameters; and
determining (1340), using the communication configuration model, a communication configuration to be used in the subnetwork of the plurality of subnetworks.

7. The method of claim 6, wherein transmitting, to the external device, the received signal strength indication comprises:
in response to receiving, from the external device, a request for the received signal strength indication, transmitting the received signal strength indication to the external device.

8. The method of any of claims 6-7, further comprises:
in response to incompletion of data transmission within a time period in the subnetwork of the plurality of subnetworks, transmitting a transmission failure report to the external device.

9. The method of any of claims 6-8, wherein the communication configuration comprises at least one of a transmission frequency and a transmission power to be used in the subnetwork of the plurality of subnetworks.

10. An apparatus for use at a device (230) external to a plurality of subnetworks, comprising:

means for receiving (304), from agent devices (225) of the plurality of subnetworks, a plurality of received signal strength indications, amount of remaining data to be transmitted within a time period in the respective subnetworks and remaining time available for transmission of the remaining data within the time period;

means for updating (306), at least in part based on the plurality of received signal strength indications, the amount of remaining data to be transmitted within the time period and the remaining time available for transmission of the remaining data within the time period, a plurality of communication configuration models for the plurality of subnetworks; and

means for transmitting (308), to the agent devices of the plurality of subnetworks, a plurality of sets of parameters associated with the plurality of communication configuration models to enable respective communication configurations to be determined in the plurality of subnetworks.

11. An apparatus for use at an agent device (225) in a subnetwork of a plurality of subnetwork, comprising:

means for transmitting (302) a received signal strength indication, amount of remaining data to be transmitted within a time period in the respective subnetworks and remaining time available for transmission of the remaining data within the time period to a device (230) external to the subnetwork of the plurality of subnetworks;

means for receiving (310), from the external device, a set of parameters associated with a communication configuration model for the subnetwork of the plurality of subnetworks, the communication configuration model being updated by the external device at least in part based on the received signal strength indication, the amount of remaining data to be transmitted within the time period and the remaining time available for transmission of the remaining data within the time period;

means for generating (312) the communication configuration model based on the set of parameters; and

means for determining (314), using the communication configuration model, a communication configuration to be used in the subnetwork of the plurality of subnetworks.

12. A computer readable storage medium comprising program instructions stored thereon, the instructions, when executed by a processor of a device, causing the device to perform the method of any of claims 1-5.

13. A computer readable storage medium comprising program instructions stored thereon, the instructions, when executed by a processor of an agent device, causing the agent device to perform the method of any of claims 6-9.


**Patentansprüche**

1. Verfahren (1200), das von einer Vorrichtung (230) außerhalb einer Vielzahl von Unternetzwerken durchgeführt wird und Folgendes umfasst:

Empfangen (1210) einer Vielzahl von Empfangssignalstärkeanzeigen, einer Menge von verbleibenden Daten, die innerhalb einer Zeitperiode in den jeweiligen Unternetzwerken zu übertragen sind, und einer verbleibenden Zeit, die zur Übertragung der verbleibenden Daten innerhalb der Zeitperiode verfügbar ist, von Agentenvorrichtungen (225) der Vielzahl von Unternetzwerken;

Aktualisieren (1220) der Menge von verbleibenden Daten, die innerhalb der Zeitperiode zu übertragen sind, und der verbleibenden Zeit, die für eine Übertragung der verbleibenden Daten innerhalb der Zeitperiode verfügbar ist, einer Vielzahl von Kommunikationsauslegungsmodellen für die Vielzahl von Unternetzwerken mindestens teilweise auf Basis der Vielzahl von Empfangssignalstärkeanzeigen; und

Übertragen (1230) einer Vielzahl von Sätzen von Parametern, die mit der Vielzahl von Kommunikationsauslegungsmodellen verknüpft sind, zu den Agentenvorrichtungen in der Vielzahl von Unternetzwerken, um es zu ermöglichen, dass jeweilige Kommunikationsauslegungen in der Vielzahl von Unternetzwerken bestimmt werden.

2. Verfahren nach Anspruch 1, wobei das Aktualisieren der Vielzahl von Kommunikationsauslegungsmodellen Folgendes umfasst:
Aktualisieren eines Kommunikationsauslegungsmodells der Vielzahl von Kommunikationsauslegungsmodellen für ein Unternetzwerk der Vielzahl von Unternetzwerken mindestens teilweise auf Basis einer Empfangssignalstärkeanzeige der Vielzahl von Empfangssignalstärkeanzeigen vom Unternetzwerk der Vielzahl von Unternetzwerken.

3. Verfahren nach einem der Ansprüche 1 bis 2, wobei das Aktualisieren der Vielzahl von Kommunikationsauslegungsmodellen Folgendes umfasst:

Aktualisieren eines Einschränkungsmodells für die Vielzahl von Unternetzwerken mindestens teilweise auf Basis der Vielzahl von Empfangssignalstärkeanzeigen;

Verwenden des Einschränkungsmodells zum Beurteilen einer Leistung der Vielzahl von Kommunikationsauslegungsmodellen; und

Aktualisieren der Vielzahl von Kommunikationsauslegungsmodellen auf Basis der beurteilten Leistung der Vielzahl von Kommunikationsauslegungsmodellen.

4. Verfahren nach Anspruch 3, das ferner Folgendes umfasst:

Initialisieren des Einschränkungsmodells und der Vielzahl von Kommunikationsauslegungsmodellen auf Basis von Umgebungsdaten der Vielzahl von Unternetzwerken;

Empfangen von mindestens einem Übertragungsfehlerbericht von mindestens einem der Vielzahl von Unternetzwerken; und

Übertragen von Anforderungen der Vielzahl von Empfangssignalstärkeanzeigen zur Vielzahl von Vorrichtungen.

5. Verfahren nach einem der Ansprüche 1 bis 4, wobei eine Kommunikationsauslegung der Kommunikationsauslegungen mindestens eines von einer Übertragungsfrequenz und einer Übertragungsleistung umfasst, die in einem Unternetzwerk der Vielzahl von Unternetzwerken zu verwenden sind.

6. Verfahren (1300), das von einer Agentenvorrichtung (225) in einem Unternetzwerk einer Vielzahl von Unternetzwerken durchgeführt wird und Folgendes umfasst:

Übertragen (1310) einer Empfangssignalstärkeanzeige, einer Menge von verbleibenden Daten, die innerhalb einer Zeitperiode in den jeweiligen Unternetzwerken zu übertragen sind, und einer verbleibenden Zeit, die für eine Übertragung der verbleibenden Daten innerhalb der Zeitperiode verfügbar ist, zu einer Vorrichtung (230) außerhalb des Unternetzwerks der Vielzahl von Unternetzwerken;

Empfangen (1320) eines Satzes von Parametern, die mit einem Kommunikationsauslegungsmodell für das Unternetzwerk der Vielzahl von Unternetzwerken verknüpft sind, von der externen Vorrichtung, wobei das Kommunikationsauslegungsmodell von der externen Vorrichtung mindestens teilweise auf Basis der Empfangssignalstärkeanzeige, der Menge von verbleibenden Daten, die innerhalb der Zeitperiode zu übertragen sind, und der verbleibenden Zeit, die für eine Übertragung der verbleibenden Daten innerhalb der Zeitperiode verfügbar ist, aktualisiert wird;

Erzeugen (1330) des Kommunikationsauslegungsmodells auf Basis des Satzes von Parametern; und

Bestimmen (1340) einer Kommunikationsauslegung, die im Unternetzwerk der Vielzahl von Unternetzwerken zu verwenden ist, unter Verwendung des Kommunikationsauslegungsmodells.

7. Verfahren nach Anspruch 6, wobei das Übertragen der Empfangssignalstärkeanzeige zur externen Vorrichtung Folgendes umfasst:

in Reaktion auf das Empfangen einer Anforderung der Empfangssignalstärkeanzeige von der externen Vorrichtung Übertragen der Empfangssignalstärkeanzeige zur externen Vorrichtung.

8. Verfahren nach einem der Ansprüche 6 bis 7, das ferner Folgendes umfasst:

in Reaktion auf eine Unvollständigkeit einer Datenübertragung innerhalb einer Zeitperiode im Unternetzwerk der Vielzahl von Unternetzwerken Übertragen eines Übertragungsfehlerberichts zur externen Vorrichtung.

9. Verfahren nach einem der Ansprüche 6 bis 8, wobei die Kommunikationsauslegung mindestens eines von einer Übertragungsfrequenz und einer Übertragungsleistung umfasst, die im Unternetzwerk der Vielzahl von Unternetzwerken zu verwenden sind.

10. Einrichtung zur Verwendung an einer Vorrichtung (230) außerhalb einer Vielzahl von Unternetzwerken, die Folgendes umfasst:

Mittel zum Empfangen (304) einer Vielzahl von Empfangssignalstärkeanzeigen, einer Menge von verbleibenden Daten, die innerhalb einer Zeitperiode in den jeweiligen Unternetzwerken zu übertragen sind, und einer verbleibenden Zeit, die zur Übertragung der verbleibenden Daten innerhalb der Zeitperiode verfügbar ist, von Agentenvorrichtungen (225) der Vielzahl von Unternetzwerken;

Mittel zum Aktualisieren (306) der Menge von verbleibenden Daten, die innerhalb der Zeitperiode zu übertragen sind, und der verbleibenden Zeit, die für eine Übertragung der verbleibenden Daten innerhalb der Zeitperiode verfügbar ist, einer Vielzahl von Kommunikationsauslegungsmodellen für die Vielzahl von Unternetzwerken mindestens teilweise auf Basis der Vielzahl von Empfangssignalstärkeanzeigen; und

Mittel zum Übertragen (308) einer Vielzahl von Sätzen von Parametern, die mit der Vielzahl von Kommunikationsauslegungsmodellen verknüpft sind, zu den Agentenvorrichtungen in der Vielzahl von Unternetzwerken, um es zu ermöglichen, dass jeweilige Kommunikationsauslegungen in der Vielzahl von Unternetzwerken bestimmt werden.

11. Einrichtung zur Verwendung an einer Agentenvorrichtung (225) in einem Unternetzwerk einer Vielzahl von Unternetzwerken, die Folgendes umfasst:

Mittel zum Übertragen (302) einer Empfangssignalstärkeanzeige, einer Menge von verbleibenden Daten, die innerhalb einer Zeitperiode in den jeweiligen Unternetzwerken zu übertragen sind, und einer verbleibenden Zeit, die für eine Übertragung der verbleibenden Daten innerhalb der Zeitperiode verfügbar ist, zu einer Vorrichtung (230) außerhalb des Unternetzwerks der Vielzahl von Unternetzwerken;
Mittel zum Empfangen (310) eines Satzes von Parametern, die mit einem Kommunikationsauslegungsmodell für das Unternetzwerk der Vielzahl von Unternetzwerken verknüpft sind, von der externen Vorrichtung, wobei das Kommunikationsauslegungsmodell von der externen Vorrichtung mindestens teilweise auf Basis der Empfangssignalstärkeanzeige, der Menge von verbleibenden Daten, die innerhalb der Zeitperiode zu übertragen sind, und der verbleibenden Zeit, die für eine Übertragung der verbleibenden Daten innerhalb der Zeitperiode verfügbar ist, aktualisiert wird;
Mittel zum Erzeugen (312) des Kommunikationsauslegungsmodells auf Basis des Satzes von Parametern; und
Mittel zum Bestimmen (314) einer Kommunikationsauslegung, die im Unternetzwerk der Vielzahl von Unternetzwerken zu verwenden ist, unter Verwendung des Kommunikationsauslegungsmodells.

12. Computerlesbares Speichermedium, das darauf gespeicherte Programmanweisungen umfasst, wobei die Anweisungen, wenn sie von einem Prozessor einer Vorrichtung ausgeführt werden, die Vorrichtung veranlassen, das Verfahren nach einem der Ansprüche 1 bis 5 durchzuführen.

13. Computerlesbares Speichermedium, das darauf gespeicherte Programmanweisungen umfasst, wobei die Anweisungen, wenn sie von einem Prozessor einer Agentenvorrichtung ausgeführt werden, die Agentenvorrichtung veranlassen, das Verfahren nach einem der Ansprüche 6 bis 9 durchzuführen.

**Revendications**

1. Procédé (1200) réalisé par un dispositif (230) externe à une pluralité de sous-réseaux, comprenant les étapes suivantes :

recevoir (1210) de dispositifs agents (225) de la pluralité de sous-réseaux une pluralité d'indications de force de signal reçues, une quantité de données restantes à transmettre dans un délai dans les sous-réseaux respectifs et un temps restant disponible pour la transmission des données restantes dans le délai ;
en se basant au moins en partie sur la pluralité d'indications de force de signal reçues, la quantité de données restantes à transmettre dans le délai et le temps restant disponible pour la transmission des données restantes dans le délai, mettre à jour (1220) une pluralité de modèles de configuration de communication pour la pluralité de sous-réseaux ; et
transmettre (1230) aux dispositifs agents de la pluralité de sous-réseaux une pluralité d'ensembles de paramètres associés à la pluralité de modèles de configuration de communication afin de permettre la détermination de configurations de communication respectives dans la pluralité de sous-réseaux.

2. Procédé selon la revendication 1, dans lequel la mise à jour de la pluralité de modèles de configuration de communication comprend ce qui suit :
mettre à jour un modèle de configuration de communication de la pluralité de modèles de configuration de communication pour un sous-réseau de la pluralité de sous-réseaux, en se basant au moins en partie sur une indication de force de signal reçue de la pluralité d'indications de force de signal reçues du sous-réseau de la pluralité de sous-réseaux.

3. Procédé selon l'une des revendications 1 et 2, dans lequel la mise à jour de la pluralité de modèles de configuration de communication comprend ce qui suit :

en se basant au moins en partie sur la pluralité d'indications de force de signal reçues, mettre à jour un modèle de contrainte pour la pluralité de sous-réseaux ;

utiliser le modèle de contrainte pour évaluer les performances de la pluralité de modèles de configuration de communication ; et

mettre à jour la pluralité de modèles de configuration de communication sur la base des performances évaluées de la pluralité de modèles de configuration de communication.

4. Procédé selon la revendication 3, comprenant en outre les étapes suivantes :

sur la base de données d'environnement de la pluralité des sous-réseaux, initialiser le modèle de contrainte et la pluralité de modèles de configuration de communication ;

recevoir d'au moins un de la pluralité de sous-réseaux au moins un rapport d'échec de transmission ; et

transmettre à la pluralité de dispositifs des demandes concernant la pluralité d'indications de force de signal reçues.

5. Procédé selon l'une des revendications 1 à 4, dans lequel une configuration de communication des configurations de communication comprend au moins une parmi une fréquence de transmission et une puissance de transmission à utiliser dans un sous-réseau de la pluralité de sous-réseaux.

6. Procédé (1300) réalisé par un dispositif agent (225) dans un sous-réseau d'une pluralité de sous-réseaux, comprenant les étapes suivantes :

transmettre (1310) à un dispositif (230) externe au sous-réseau de la pluralité de sous-réseaux une indication de force de signal reçue, une quantité de données restantes à transmettre dans un délai dans les sous-réseaux respectifs et un temps restant disponible pour la transmission des données restantes dans le délai ;

recevoir (1320) du dispositif externe un ensemble de paramètres associés à un modèle de configuration de communication pour le sous-réseau de la pluralité de sous-réseaux, le modèle de configuration de communication étant mis à jour par le dispositif externe en se basant au moins en partie sur l'indication de force de signal reçue, la quantité de données restantes à transmettre dans le délai et le temps restant disponible pour la transmission des données restantes dans le délai ;

générer (1330) le modèle de configuration de communication sur la base de l'ensemble de paramètres ; et

l'aide du modèle de configuration de communication, déterminer (1340) une configuration de communication à utiliser dans le sous-réseau de la pluralité de sous-réseaux.

7. Procédé selon la revendication 6, dans lequel la transmission de l'indication de force de signal reçue au dispositif externe comprend ce qui suit :

en réponse à la réception, du dispositif externe, d'une demande d'indication de force de signal reçue, transmettre l'indication de force de signal reçue au dispositif externe.

8. Procédé selon l'une des revendications 6 et 7, comprenant en outre :

en réponse à l'inachèvement de la transmission de données dans un délai dans le sous-réseau de la pluralité de sous-réseaux, transmettre un rapport d'échec de transmission au dispositif externe.

9. Procédé selon l'une des revendications 6 à 8, dans lequel la configuration de communication comprend au moins une parmi une fréquence de transmission et une puissance de transmission à utiliser dans le sous-réseau de la pluralité de sous-réseaux.

10. Appareil destiné à être utilisé sur un dispositif (230) externe à une pluralité de sous-réseaux, comprenant :

des moyens pour recevoir (304) de dispositifs agents (225) de la pluralité de sous-réseaux une pluralité d'indications de force de signal reçues, une quantité de données restantes à transmettre dans un délai dans les sous-réseaux respectifs et un temps restant disponible pour la transmission des données restantes dans le délai ;

des moyens pour, en se basant au moins en partie sur la pluralité d'indications de force de signal reçues, la quantité de données restantes à transmettre dans le délai et le temps restant disponible pour la transmission des données restantes dans le délai, mettre à jour (306) une pluralité de modèles de configuration de communication pour la pluralité de sous-réseaux ; et

des moyens pour transmettre (308) aux dispositifs agents de la pluralité de sous-réseaux une pluralité d'ensembles de paramètres associés à la pluralité de modèles de configuration de communication afin de permettre la détermination de configurations de communication respectives dans la pluralité de sous-réseaux.

11. Appareil destiné à être utilisé sur un dispositif agent (225) dans un sous-réseau d'une pluralité de sous-réseaux, comprenant :

des moyens pour transmettre (302) à un dispositif (230) externe au sous-réseau de la pluralité de sous-réseaux une indication de force de signal reçue, une quantité de données restantes à transmettre dans un délai dans les sous-réseaux respectifs et un temps restant disponible pour la transmission des données restantes dans le délai ;
des moyens pour recevoir (310) du dispositif externe un ensemble de paramètres associés à un modèle de configuration de communication pour le sous-réseau de la pluralité de sous-réseaux, le modèle de configuration de communication étant mis à jour par le dispositif externe en se basant au moins en partie sur l'indication de force de signal reçue, la quantité de données restantes à transmettre dans le délai et le temps restant disponible pour la transmission des données restantes dans le délai ;
des moyens pour générer (312) le modèle de configuration de communication sur la base de l'ensemble de paramètres ; et
des moyens pour, à l'aide du modèle de configuration de communication, déterminer (314) une configuration de communication à utiliser dans le sous-réseau de la pluralité de sous-réseaux.

12. Support de stockage lisible par ordinateur comprenant des instructions de programme qui y sont stockées, les instructions, lorsqu'elles sont exécutées par un processeur d'un dispositif, amenant le dispositif à réaliser le procédé selon l'une des revendications 1 à 5.

13. Support de stockage lisible par ordinateur comprenant des instructions de programme qui y sont stockées, les instructions, lorsqu'elles sont exécutées par un processeur d'un dispositif agent, amenant le dispositif agent à réaliser le procédé selon l'une des revendications 6 à 9.

FIG. 1A

FIG. 1B

FIG. 2

FIG. 3

FIG. 4A

FIG. 4B

FIG. 5

FIG. 6

FIG. 7

FIG. 8

FIG. 9

FIG. 10

FIG. 11

1200

RECEIVE, FROM A PLURALITY OF SUB-NETWORKS, A
PLURALITY OF RECEIVED SIGNAL STRENGTH
INDICATIONS

1210

UPDATE, AT LEAST IN PART BASED ON THE PLURALITY OF
RECEIVED SIGNAL STRENGTH INDICATIONS, A PLURALITY
OF COMMUNICATION CONFIGURATION MODELS FOR THE
PLURALITY OF SUB-NETWORKS

1220

TRANSMIT, TO THE PLURALITY OF SUB-NETWORKS, A
PLURALITY OF SETS OF PARAMETERS ASSOCIATED WITH
THE PLURALITY OF COMMUNICATION CONFIGURATION
MODELS TO ENABLE RESPECTIVE COMMUNICATION
CONFIGURATIONS TO BE DETERMINED IN THE PLURALITY
OF SUB-NETWORKS

1230

FIG. 12

1300

TRANSMIT A RECEIVED SIGNAL STRENGTH INDICATION
TO A DEVICE EXTERNAL TO THE SUB-NETWORK OF THE
PLURALITY OF SUB-NETWORKS

1310

RECEIVE, FROM THE EXTERNAL DEVICE, A SET OF
PARAMETERS ASSOCIATED WITH A COMMUNICATION
CONFIGURATION MODEL FOR THE SUB-NETWORK OF THE
PLURALITY OF SUB-NETWORKS, THE COMMUNICATION
CONFIGURATION MODEL BEING UPDATED BY THE
EXTERNAL DEVICE AT LEAST IN PART BASED ON THE
RECEIVED SIGNAL STRENGTH INDICATION

1320

GENERATE THE COMMUNICATION CONFIGURATION
MODEL BASED ON THE SET OF PARAMETERS

1330

DETERMINE, USING THE COMMUNICATION
CONFIGURATION MODEL, A COMMUNICATION
CONFIGURATION TO BE USED IN THE SUB-NETWORK OF
THE PLURALITY OF SUB-NETWORKS

1340

FIG. 13

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017127427 A

- US 2017006459 A

**Non-patent literature cited in the description**

- Towards 6G in-X Subnetworks With Sub-Millisecond Communication Cycles and Exterem Reliability. **ADEOGUN RAMONI et al.** IEEE Access. IEEE, 10 June 2020, vol. 8, 110172-110188